# EUROPÄISCHE PATENTSCHRIFT

(11) **EP 3 898 259 B1**
(45) Veröffentlichungstag und Bekanntmachung des Hinweises auf die Patenterteilung: **08.07.2026**
(21) Anmeldenummer: 19831679.6
(22) Anmeldetag: 18.12.2019
(51) Int. Cl.: B44B 5/00, B23Q 3/155, B60R 13/10

(54) **VERFAHREN UND VORRICHTUNG ZUM PRÄGEN VON KENNZEICHEN, INSBESONDERE KRAFTFAHRZEUGKENNZEICHEN**
METHOD AND DEVICE FOR EMBOSSING LICENSE PLATES, IN PARTICULAR VEHICLE LICENSE PLATES
PROCÉDÉ ET DISPOSITIF POUR L'ESTAMPAGE DE PLAQUES D'IMMATRICULATION, EN PARTICULIER DE PLAQUES D'IMMATRICULATION DE VÉHICULE AUTOMOBILE

(30) Priorität: 21.12.2018 DE 102018009979; 18.01.2019 DE 102019000320
(43) Veröffentlichungstag der Anmeldung: 27.10.2021
(73) Patentinhaber: Tönnjes ISI Patent Holding GmbH, 27751 Delmenhorst (DE)
(72) Erfinder: BEENKEN, Björn, 27777 Ganderkesee (DE)
(74) Vertreter: Hoener, Matthias
(86) Internationale Anmeldenummer: PCT/EP2019/086024
(87) Internationale Veröffentlichungsnummer: WO 2020/127536

(56) Entgegenhaltungen:
- EP-A1- 3 318 344
- DE-A1- 102010 023 254
- DE-A1- 19 808 801
- DE-A1- 19 836 801
- DE-U1- 202018 104 369

## Beschreibung

Die Erfindung betrifft ein Verfahren zum Prägen von Kennzeichen gemäß dem Anspruch 1. Des Weiteren betrifft die Erfindung eine Vorrichtung zum Prägen von Kennzeichen gemäß dem Anspruch 13. Kennzeichen, und zwar insbesondere Kraftfahrzeugkennzeichen, verfügen über eine individuelle Reihenfolge von Zeichen bzw. Ziffern. Bei diesen Zeichen kann es sich um Buchstaben und/oder Zahlen oder sonstigen Satzzeichen oder Symbole handeln. Die Anzahl, die Reihenfolge sowie die Anordnung der Zeichen auf dem Kennzeichen sind länderspezifisch festgelegt und somit unterschiedlich. Üblicherweise bestehen die Kraftfahrzeugkennzeichen sowohl aus Buchstaben als auch aus Zahlen in einer bestimmten Reihenfolge. Es gibt auch Staaten, in denen die Kraftfahrzeugkennzeichen nur Buchstaben oder nur Zahlen aufweisen. Andere Staaten lassen nur bestimmte Buchstaben bzw. Zeichen oder Symbole für die Kraftfahrzeugkennzeichnung zu. Gleiches kann auch für Zahlen gelten. Unterschiede gibt es außerdem in der Form der Kennzeichen und der damit verbundenen Anordnung der Zeichen auf dem Kennzeichen.

Die für das individuelle Kennzeichen vorgesehene Reihenfolge der Buchstaben und/oder Zahlen wird bei Kennzeichen der hier angesprochenen Art in einen Kennzeichenrohling eingeprägt. Bei diesem Rohling handelt es sich in der Regel um einen flachen Zuschnitt aus dünnem Blech, beispielsweise Aluminium, einer dünnwandigen Kunststoffplatte oder ähnlichem. Der Rohling kann ggf. auch schon mit immer wiederkehrenden Prägungen versehen sein, wie beispielsweise einer umlaufenden Randprägung oder auch bestimmten Zeichenkombinationen, die bei einer größeren Anzahl von Kennzeichen stets die gleichen sein können. Der individuelle Zeichensatz wird in den noch ungeprägten oder vorgeprägten Rohlingen durch Prägewerkzeuge eingeprägt. Jedes Prägewerkzeug besteht aus einem Oberteil, in dem ein Negativ des Zeichens eingearbeitet ist und einem Unterteil, auf dem ein Positiv zu dem Negativ des Zeichens ausgebildet ist. Das Positiv und das Negativ des Prägewerkzeugs sind als getrennte Werkzeugteile stets als Einheit zusammengefasst und werden immer in Kombination bewegt bzw. abgelegt oder in einem Magazin gelagert. Zwischen dem Positiv und dem Negativ wird für das Pressen des Kennzeichens der Rohling abgelegt. Für jedes in den Rohling zu prägendes Zeichen wird entsprechend ein Prägewerkzeug bzw. ein Positiv und ein Negativ ausgerichtet, sodass beim Prägen mehrere Prägewerkzeuge nebeneinander liegend dem Rohling zugeordnet sind.

In einem Magazin ist ein entsprechender Vorrat der benötigten Prägewerkzeuge bzw. der Negative und Positive gelagert. Aus dem Magazin werden die zur individuellen Prägung des jeweiligen Kennzeichens benötigten Prägewerkzeugteilen bzw. die Zeichen entnommen und in einer Werkzeugaufnahme bzw. einem Rahmen zum gewünschten Zeichensatz angeordnet. Diese Anordnung ist zeitlich sehr aufwendig und fehleranfällig.

Das Dokument DE 19808801 A1 offenbart beispielsweise ein Verfahren zum Prägen von Kennzeichen-Schildern, insbesondere Kfz-Kennzeichen, mit einer Vorrichtung, in der Schildplatinen von einer Seite und Werkzeuge zum Prägen insbesondere von der anderen Seite in eine Presse eingegeben werden, und die Werkzeuge einem Magazin, insbesondere einem vertikal gerichteten und mehrere nebeneinander angeordnete und vertikal verfahrbare Magazinsäulen aufweisenden Magazin, entnommen und in die Presse eingegeben werden.

Darüber hinaus sieht das Dokument DE 102010023254 A1 die Verwendung einer Handhabungsvorrichtung in Form eines Roboterarms vor, um Prägewerkzeuge zu handhaben und einen jeweiligen Rohling vor den Stanzwerkzeugen zu positionieren und/oder eine Zentrierung bzw. Ausrichtung der Prägewerkzeuge gegenüber dem Rohling vorzunehmen.

Der Erfindung liegt die Aufgabe zugrunde, ein Verfahren und eine Vorrichtung zum Prägen von Kennzeichen, insbesondere Kraftfahrzeugkennzeichen, zu schaffen, die einfach aufgebaut und flexibel einsetzbar sind.

Ein Verfahren zur Lösung dieser Aufgabe weist die Maßnahmen des Anspruchs 1 auf. Demnach ist es vorgesehen, dass von einer Handhabungseinrichtung die für das jeweils zu prägende Kennzeichen benötigten Prägewerkzeuge, insbesondere mindestens ein Negativ und mindestens ein Positiv, aus einem Magazin entnommen werden und den Prägewerkzeugen ein Kennzeichenrohling zugeführt wird. Die Prägewerkzeuge samt Kennzeichenrohling werden sodann zu einer Prägeeinrichtung zum Prägen des Rohlings zum Kennzeichen transportiert. Zum Bestücken der Werkzeughalterahmen mit mindestens einem Negativ und mindestens einem Positiv des Prägewerkzeugs werden zwei relativ zueinander bewegbare Werkzeughalterahmen nacheinander von der Handhabungseinrichtung angefahren. Dabei setzt die Handhabungseinrichtung automatisiert ein Negativ und ein Positiv des gleichen Prägewerkzeugs nacheinander in die beiden Rahmen. Außerdem kann es vorgesehen sein, dass zunächst mehrere Negative verschiedener Prägewerkzeuge und darauf mehrere Positive der entsprechenden Prägewerkzeuge in den Rahmen positioniert werden. Bei den Rahmen handelt es sich um einen unteren Werkzeughalterahmen und einen über dem unteren Werkzeughalterahmen angeordneten oberen Werkzeughalterahmen. Durch diese schrittweise Bestückung der beiden Rahmen mit jeweils einem Teil eines Prägewerkzeugs durch die Handhabungseinrichtung lässt sich das Kennzeichen auf eine schnelle und zuverlässige sowie flexible Art und Weise prägen bzw. für die Prägung vorbereiten.

Insbesondere sieht die Erfindung vor, dass zum Ablegen des mindestens einen Positivs und des mindestens einen Negativs des gleichen Zeichens auf den Werkzeughalterahmen und zum späteren Abheben des mindestens einen Positivs und des mindestens einen Negativs von dem Rahmen der untere Werkzeughalterahmen horizontal und parallel zu dem oberen Werkzeughalterahmen verfahren wird. Gleichermaßen ist es auch vorgesehen, dass der obere Werkzeughalterahmen horizontal und parallel zu dem unteren Werkzeughalterahmen verfahren wird. Das relative Verfahren der beiden Halterahmen erfolgt genau so weit, dass die Prägewerkzeugteile bzw. die Negative und die Positive in den Halterahmen platzierbar sind. Dabei werden die plattenartig ausgebildeten Negative und Positive auf einer Oberseite der Halterahmen abgesetzt. Die Rahmen sind dabei derart ausgebildet, dass sie die Negative und Positive an deren Rändern aufnehmen, ohne dass diese durch die Rahmen hindurch fallen.

Bevorzugt ist es weiter vorgesehen, dass zunächst mindestens ein Negativ eines Prägewerkzeugs, vorzugsweise mehrere Negative mehrerer Prägewerkzeuge, auf dem oberen Werkzeughalterahmen abgelegt werden und darauf das entsprechende Positiv des Prägewerkzeugs, vorzugsweise die entsprechenden Positive der Prägewerkzeuge, auf dem unteren Werkzeughalterahmen abgelegt werden. Diese Reihenfolge des Ablegens hat den Vorteil, dass die Prägewerkzeugteile bzw. die Negative und Positive eines Zeichens direkt aus einem Magazin, in dem die Werkzeuge gelagert sind, entnommen werden können. In dem Magazin sind die Negative und Positive eines Prägewerkzeugs derart übereinander gestapelt, dass das obere Prägewerkzeugteil bzw. das Negativ auf dem unteren Prägewerkzeugteil bzw. dem Positiv gelagert ist. Beim späteren Abheben der Prägewerkzeugteile nach dem Pressen wird zunächst das Positiv zurück an die entsprechende Position in dem Magazin abgelegt und darauf das entsprechende Negativ auf dem entsprechenden Positiv in dem Magazin.

Nach der Bestückung bzw. der Ablage des mindestens einen Negativs und des mindestens einen Positivs auf die Werkzeughalterahmen, auf den unteren Werkzeughalterahmen, vorzugsweise auf die Positive der Prägewerkzeuge, wird der Kennzeichenrohling von der Handhabungseinrichtung abgelegt.

Der Kennzeichenrohling wird dabei von der Handhabungseinrichtung aus einem Speicher für die Rohlinge entnommen. Es kann vorgesehen sein, dass der Kennzeichenrohling bereits eine geprägte Umrandung aufweist, mit der er auf eine entsprechende Aufnahme, insbesondere eine entsprechende Randstruktur, auf dem unteren Werkzeughalterahmen abgelegt wird. Dadurch kann der Kennzeichenrohling während der weiteren Bewegung des unteren Werkzeughalterahmens nicht mehr verrutschen. Alternativ kann es vorgesehen sein, dass, insbesondere wenn das Kennzeichen keine Vorprägung aufweist, in dem unteren Werkzeughalterahmen Vorsprünge angeordnet sind, welche den Rohling in seiner Positionierung über den Positiven wenigstens zeitweise fixiert.

Die Erfindung sieht vor, dass der obere und der untere Werkzeughalterahmen durch eine horizontale und parallele Relativbewegung übereinander ausgerichtet werden, insbesondere wird der untere Werkzeughalterahmen unter den oberen Werkzeughalterahmen verschoben, sodass die korrespondierenden Positive und Negative der Prägewerkzeuge übereinander ausgerichtet sind, wobei zwischen den Positiven und Negativen der Kennzeichenrohling positioniert ist. Dieses Verfahren erfolgt mittels eines Linearantriebs der nach dem Ablegen des Rohlings auf dem unteren Werkzeughalterahmen aktiviert wird. Dabei wird der untere Werkzeughalterahmen aus einer zunächst ungeführten Bewegung mindestens einer bzw. zwei Schienen zugeführt. Durch diese Schienen wird der untere Werkzeughalterahmen genau in die Position geführt, die exakt sowie reproduzierbar unter dem oberen Werkzeughalterahmen angeordnet ist. Dabei wird der untere Werkzeughalterahmen durch die Schienen geführt und in seiner Position fixiert.

Bevorzugterweise ist es darüber hinaus vorgesehen, dass die beiden übereinander ausgerichteten Werkzeughalterahmen vertikal relativ zueinander verfahren werden, wobei vorzugsweise der untere Rahmen auf den oberen Rahmen zubewegt wird, und sodann beide Werkzeughalterahmen gemeinschaftlich in die Prägeeinrichtung verfahren werden, in der die Werkzeughalterahmen gegeneinander verpresst werden. Dabei wird insbesondere der untere Werkzeughalterahmen auf eine Höhe bzw. eine Ebene verfahren, die mit einer Höhe bzw. einer Ebene eines Pressstempels der Prägeeinrichtung übereinstimmt. Sobald die beiden Werkzeughalterahmen entsprechend zueinander positioniert sind, werden beide gemeinschaftlich auf den Pressteller gefahren. Für eine definierte Orientierung der beiden Werkzeughalterahmen untereinander kann der untere Halterahmen mindestens einen, vorzugsweise zwei oder drei, Stifte aufweisen, die beim Heranfahren an den oberen Werkzeughalterahmen in korrespondierende Öffnungen geführt werden. Dabei sind die Stifte und die korrespondierenden Öffnungen derart bemessen, dass eine feste bzw. reproduzierbare relative Anordnung der beiden Rahmen erfolgt. Gleichermaßen kann es vorgesehen sein, dass die beiden Rahmen andere Mittel für eine relative Ausrichtung aufweisen.

Insbesondere kann es vorgesehen sein, dass vor dem Zusammenführen der beiden Werkzeughalterahmen die nebeneinanderliegenden Negative und Positive auf dem oberen Werkzeughalterahmen und dem unteren Werkzeughalterahmen durch jeweils ein Schiebemittel zusammengeschoben werden, um eventuelle, ungewollte Zwischenräume zwischen den einzelnen Prägewerkzeugteilen bzw. zwischen den einzelnen Negativen und zwischen den einzelnen Positiven zu vermeiden.

Weiter kann es die Erfindung vorsehen, dass die beiden Rahmen nach dem Pressen gemeinschaftlich aus der Presse herausverfahren werden bzw. von dem Pressetisch abgeschoben werden, und nach einem vertikalen Absenken des unteren Werkzeughalterahmens relativ zu dem oberen Werkzeughalterahmen der untere Werkzeughalterahmen unter dem oberen Werkzeughalterahmen horizontal vorverfahren wird. Sobald die beiden Werkzeughalterahmen horizontal voneinander verfahren sind, werden mindestens ein Positiv und darauf ein Negativ durch die Handhabungseinrichtung von den Rahmen entnommen und zurück in das Magazin sortiert. Sofern in einem weiteren Schritt ein Kennzeichen zu prägen ist, das sich in mehr als einem Zeichen von dem vorangegangenen Kennzeichen unterscheidet, müssen entsprechend mehrere Negative bzw. Positive ausgetauscht werden. Sofern nachfolgend zunächst ein vorderes Kraftfahrzeugkennzeichen und darauf ein hinteres Kraftfahrzeugkennzeichen geprägt werden, wird lediglich das geprägte Kennzeichen gegen ein Kennzeichenrohling ausgetauscht, ohne dass dabei die Prägewerkzeuge ausgetauscht werden. Der Prägevorgang wird sodann für das zweite Kennzeichen des Kennzeichenpaars wiederholt.

Daraufhin werden die von der Handhabungseinrichtung mit mindestens einem im dreidimensionalen Raum bewegbaren Erfassungsmittel benötigten Prägewerkzeuge, insbesondere die benötigten Negative und Positive, aus einem Magazin herausgesucht und entnommen und in der richtigen Reihenfolge auf mindestens einen oberen und mindestens einen unteren Werkzeughalterahmen abgelegt. Gleichermaßen wird von der Handhabungseinrichtung ein Kennzeichenrohling aus mindestens einem Speicher entnommen und auf dem unteren Werkzeughalterahmen bzw. auf den Positiven abgelegt. Weiter ist es denkbar, dass im Anschluss ein weiterer unterer Werkzeughalterahmen von der Handhabungseinrichtung mit einem weiteren Kennzeichenrohling bestückt wird. Nach Beendigung des Prägevorgangs des Kennzeichenrohlings zum Kennzeichen wird sodann das Kennzeichen durch die Handhabungseinrichtung von dem unteren Werkzeughalterahmen bzw. von den Positiven der Prägewerkzeuge wieder abgehoben und einer Abförderung zugeführt. Das roboterartig ausgebildete Erfassungsmittel weist an einem vorderen Ende ein Aufnahmemittel auf. Bei diesem Mittel kann es sich beispielsweise um einen Greifer, einen Magneten, insbesondere einen Elektromagneten, oder einen Saugnapf handeln. Durch dieses Aufnahmemittel können die Prägewerkzeugteile sowie der Kennzeichenrohling bzw. das Kennzeichen einfach und zuverlässig erfasst und wieder abgesetzt werden.

Außerdem kann es erfindungsgemäß weiter vorgesehen sein, dass von der Handhabungseinrichtung untere und obere Werkzeughalterahmen von mehreren, vorzugsweise zwei, Prägeeinrichtungen mit Negativen, Positiven sowie Kennzeichenrohlingen im Wechsel oder nacheinander bestückt werden. Beispielsweise kann es vorgesehen sein, dass zwei Prägeeinrichtungen gegenüberliegend angeordnet sind und abwechselnd bzw. parallel von der Handhabungseinrichtung mit den Prägewerkzeugen bestückt werden. Mittig zwischen den Prägeeinrichtungen kann sowohl das Magazin für die Prägewerkzeuge, insbesondere die Negative oder Positive, angeordnet sein sowie auch der Speicher für die Rohlinge. Durch diese Kombination zweier Prägeeinrichtungen kann die Handhabungseinrichtung besonders effizient genutzt werden. Insbesondere während eine Prägeeinrichtung ein Rohling zu einem Kennzeichen prägt, kann die weitere Prägeeinrichtung mit den Negativen und Positiven bestückt werden.

Darüber hinaus kann es weiter vorgesehen sein, dass zum Prägen verschiedenartiger, insbesondere verschiedenartig dimensionierter, Kennzeichenrohlinge die Werkzeughalterahmen der mindestens einen Prägeeinrichtung der Form der Kennzeichenrohlinge entsprechend ausgetauscht werden. Wenn beispielsweise von einem eher länglichen Kennzeichenrohling auf einen eher quadratischen Kennzeichenrohling gewechselt werden soll, sind lediglich die Werkzeughalterahmen zu wechseln. Die Aufnahmen in den Werkzeughalterahmen für die Prägeeinrichtungen, insbesondere für die Negative und Positive, können gleich ausgebildet sein. Für das Prägen verschiedener Kennzeichenformen sind somit die Werkzeughalterahmen und die Rohlinge anzupassen bzw. auszutauschen und eventuell auch wenigstens einige Prägewerkzeuge, insbesondere wenigstens einige Negative und Positive. So kann es durchaus der Fall sein, dass für verschiedene Kennzeichenformate verschiedene Schriftfonts und somit verschiedene Sätze von Prägewerkzeugen verwendet werden müssen. Alternativ ist es außerdem denkbar, dass ein Magazin für die Prägewerkzeuge von Beginn an mit allen Schriftfonts ausgestattet ist.

Ein weiteres Ausführungsbeispiel der Erfindung kann es vorsehen, dass die Prägewerkzeuge, insbesondere die Positive und die Negative, sowie Prägeeinsätze, in den Werkzeughalterahmen vor dem Aufeinanderzubewegen der Werkzeughalterahmen zusammengeschoben, zentriert und/oder vermittelt werden und zwar durch Beaufschlagung einer seitlichen bzw. vertikalen Kraft, die durch einen Aktuator, insbesondere einen Zentrierzylinder, vermittelt wird. Diese Beaufschlagung einer Kraft oder eines kurzen Impulses erfolgt stoßweise sowohl für die Prägewerkzeuge bzw. Prägeeinsätze des unteren als auch des oberen Werkzeughalterahmens. Durch diese Beaufschlagung mit einer Kraft wird sichergestellt, dass die Zeichen stets an der vorgesehenen Position in die Rohlinge geprägt werden.

Darüber hinaus stellt es ein weiteres Ausführungsbeispiel dar, dass vor dem Bestücken der Werkzeughalterahmen mit den Prägewerkzeugen, insbesondere den Negativen und Positiven, selbige durch die Handhabungseinrichtung identifiziert werden, wobei die Handhabungseinrichtung ein Sensormittel aufweist, mit dem entsprechende Identifikationsmerkmale der Negative und Positive erfasst werden. Dadurch kann vermieden werden, dass falsch in das Magazin einsortierte Prägewerkzeuge erfasst werden und auf die Halterahmen abgelegt werden. Durch die Identifikation einzelner Prägewerkzeuge kann zum einen garantiert werden, dass stets die richtigen Zeichen geprägt werden und zum anderen kann beispielsweise nachvollzogen werden, wie oft bestimmte Prägewerkzeuge bereits verwendet wurden. So lässt sich insbesondere die Wartung bzw. der Austausch bestimmter Prägewerkzeuge gegen neue Prägewerkzeuge auf eine reproduzierbare und verlässliche Art und Weise regeln.

Eine Vorrichtung zur Lösung der eingangs genannten Aufgabe weist die Merkmale des Anspruchs 13 auf. Demnach ist es vorgesehen, dass die Vorrichtung mindestens ein Magazin für einen Vorrat an Prägewerkzeugen, wenigstens einen Speicher für Kennzeichenrohlinge, wenigstens eine Prägepresse und mindestens eine Handhabungseinrichtung zum Handhaben der Prägewerkzeuge aufweist. Außerdem weist die Vorrichtung zwei relativ zueinander bewegbare Werkzeughalterahmen auf, nämlich einen unteren Werkzeughalterahmen und einen oberen Werkzeughalterahmen, die der Aufnahme mindestens eines Positivs des Prägewerkzeugs und mindestens eines Negativs des Prägewerkzeuges dienen. Durch die relative Beweglichkeit der Werkzeughalterahmen untereinander lassen sich selbige nacheinander von der Handhabungseinrichtung mit den Prägewerkzeugteilen bzw. den entsprechenden Negativen und Positiven bestücken. Durch diese schrittweise Bestückung der Rahmen mit den Prägewerkzeugteilen können die Kennzeichen auf eine schnelle, einfache sowie zuverlässige und flexible Art und Weise geprägt werden.

Außerdem sieht die Erfindung vor, dass der untere Werkzeughalterahmen mindestens in zwei, Schienen führbar ist, wobei die zwei Schienen den unteren Werkzeughalterahmen unter den oberen Werkzeughalterahmen ausrichten. Die Schienen können in entsprechende Ausnehmungen des unteren Werkzeughalterahmens eingreifen. Dabei kann es vorgesehen sein, dass die Schienen nur zeitweise mit dem unteren Werkzeughalterahmen zusammengeführt sind. Durch die Schienen wird eine Bewegung des unteren Werkzeughalterahmens quer zur horizontalen Relativbewegung zum oberen Werkzeughalterahmen unterbunden. So lässt sich der untere Werkzeughalterahmen relativ zu dem oberen Werkzeughalterahmen reproduzierbar verfahren.

Darüber hinaus kann es ein weiteres besonderes vorteilhaftes Ausführungsbeispiel der vorliegenden Erfindung vorsehen, dass der untere und/oder der obere Werkzeughalterahmen einem Hubmittel zugeordnet sind zum Zusammenfahren der Werkzeughalterahmen und/oder dass der untere und/oder der obere Werkzeughalterahmen mindestens einem Translationsmittel zum horizontalen gemeinschaftlichen oder getrennten Verfahren zugeordnet sind. Dabei können dem Hubmittel und/oder dem Translationsmittel Linearantriebe zugeordnet sein. Außerdem ist es denkbar, dass insbesondere das Hubmittel pneumatisch betreibbar ist.

Erfindungsgemäß ist es vorgesehen, dass der untere Werkzeughalterahmen mindestens ein erstes Mittel zum Ausrichten und der obere Werkzeughalterahmen mindestens ein zweites Mittel zum Ausrichten aufweist, wobei beim vertikalen Zusammenfahren der Werkzeughalterahmen das erste und das zweite Mittel zusammengeführt werden und die Werkzeughalterahmen zueinander ausgerichtet werden. Durch diese Mittel, die beispielweise als Stift und korrespondierende Öffnung ausgebildet sein können, werden die beiden Rahmen zueinander sowie reproduzierbar ausgerichtet. Die so ausgerichteten Rahmen werden sodann in die Prägeeinrichtung geführt, in der sie von oben und/oder von unten mit einem definierten Druck beaufschlagbar sind.

Die Erfindung sieht vor, dass die Handhabungseinrichtung roboterartig ausgebildet ist und dazu dient, zum Prägen des Kennzeichens benötigte Prägewerkzeuge, insbesondere ein Positiv und ein Negativ, auf die Werkzeughalterahmen zu platzieren, in dem die Handhabungseinrichtung mindestens ein mehrachsig im dreidimensionalen Raum bewegbares Erfassungsmittel aufweist, wobei durch bewegliche Arme der Handhabungseinrichtung das Erfassungsmittel im dreidimensionalen Raum beweglich ist. Die Handhabungseinrichtung sucht sich automatisch nach und nach die benötigten Prägewerkzeuge bzw. die Negative und Positive aus dem Magazin und überführt sie in der richtigen Reihenfolge zu den Halterahmen, wo die Handhabungseinrichtung die Werkzeugteile zugleich an der vorgesehenen Position absetzt. Die Prägewerkzeuge werden von der Handhabungseinrichtung automatisch in der Reihenfolge der Zeichen auf dem herzustellenden Kennzeichen dem Magazin entnommen und an der richtigen Stelle auf bzw. in den Halterahmen positioniert. Dazu ist die Handhabungseinrichtung als ein Roboter ausgebildet, der insbesondere auch als Zentriereinheit dient. Die Handhabungseinrichtung weist ein mehrachsig bewegbares Erfassungsmittel auf. Beim Erfassungsmittel kann es sich um einen Greifer, einen Sauger oder auch um Magnete handeln, die geeignet sind, mindestens jeweils ein ausgewähltes Prägewerkzeug und/oder auch einen Rohling zur Herstellung des Kennzeichens zu ergreifen und festzuhalten, um das Prägewerkzeug bzw. den Kennzeichenrohling an die gewünschte Stelle zu transportieren und dort abzusetzen. Dadurch, dass das Erfassungsmittel mehrachsig bewegbar ist, kann es das jeweilige Prägewerkzeug bzw. den Rohling räumlich umorientieren, wodurch das Magazin für die Prägewerkzeugteile, der Speicher für die Kennzeichenrohlinge und die Werkzeughalterahmen sich nicht nur an verschiedenen Positionen der Vorrichtung befinden können, sondern auch auf verschiedenen Höhen, die sich ggf. verändern können, wie das beispielsweise bei den im Speicher übereinandergestapelten Rohlingen der Fall ist.

Die Handhabungseinrichtung ist nach einer weiteren vorteilhaften Ausgestaltung der Erfindung mit mehreren, vorzugsweise drei, jeweils über eine Rotationsachse bewegbaren Armen versehen, die die Zentriereinheit darstellen. Die Arme bilden bevorzugte Parallelogramme. Die so ausgebildete Handhabungseinrichtung, die auch als Delta-Roboter bezeichnet wird, hält das Erfassungsmittel bei allen denkbaren Positionen in einem räumlichen, dreidimensionalen Bereich stets in gleicher Ausrichtung. Das Erfassungsmittel kann dadurch in der gleichen Richtung auf ein Prägewerkzeug oder einen Rohling zugreifen und das Prägewerkzeug bzw. den Rohling ohne ein Verkippen oder Verschwenken an einer anderen Stelle absetzen. Denkbar ist es aber auch, das Erfassungsmittel so an der Handhabungseinrichtung anzuordnen, dass es unter Beibehaltung der Richtung gezielt andere Bewegungen, insbesondere Drehbewegungen, ausüben kann, beispielsweise um den Kennzeichenrohling und/oder ein Prägewerkzeugteil von der Position im Speicher bzw. im Magazin in eine andere Position zu verdrehen, die das Prägewerkzeugteil bzw. der Kennzeichenrohling in dem Halterahmen bzw. neben demselben einnehmen soll.

Die Erfindung kann es außerdem vorsehen, dass dem unteren Werkzeughalterahmen mindestens ein Anschlag zugeordnet ist, der zur Positionierung und/oder zur Ausrichtung des jeweiligen Kennzeichenrohlings dient. Insbesondere wird dadurch der Kennzeichenrohling in einer definierten Relativposition zu den Werkzeugteilen auf oder in den Rahmen abgelegt. Der Rohling wird dadurch beim Auflegen auf den Halterahmen gleichzeitig mit der gewünschten oder erforderlichen Relativlage zu den Positiven ausgerichtet. Alternativ oder zusätzlich ist es auch denkbar, den Prägewerkzeugteilen mindestens ein Anschlag zuzuordnen.

Darüber hinaus kann die Erfindung es vorsehen, dass der Vorrichtung mindestens zwei Prägeeinrichtungen mit jeweils einem unteren Werkzeughalterahmen und einem oberen Werkzeughalterahmen zugeordnet sind, wobei beide Prägeeinrichtungen durch die selbe Handhabungseinrichtung bedienbar sind. Dabei können die beiden Prägeeinrichtungen derart zueinander positioniert sein, dass das Magazin für die Prägeeinrichtungen und/oder der Speicher für die Rohlinge zwischen den beiden Prägeeinrichtungen positioniert sind. Durch diese Positionierung können beide Prägeeinrichtungen auf eine besonders zeiteffiziente Art und Weise von der Handhabungseinrichtung bestückt bzw. bedient werden. Während beispielsweise ein Rohling in einer Prägeeinrichtung geprägt wird, kann währenddessen die Handhabungseinrichtung die Werkzeughalterahmen der anderen Prägeeinrichtung bestücken und umgekehrt. Auf diese Art und Weise ist die Handhabungseinrichtung hochgradig ausgelastet.

Weiter ist es denkbar, dass die Prägewerkzeuge, insbesondere die Negative und Positive Identifikationsmerkmale und die Handhabungseinrichtung ein Sensormittel aufweisen, wobei die Identifikationsmerkmale von dem Sensormittel der Handhabungseinrichtung auslesbar sind. Bei dem Identifikationsmittel kann es sich um eine Gravur handeln, die optisch von dem entsprechenden Sensormittel erfasst werden kann, ein elektronisches Identifikationsmerkmal, wie beispielsweise ein Datenspeicher, ein Funkchip oder ein RFID, das ebenfalls durch ein entsprechendes Mittel auszulesen ist oder um ein vergleichbares Mittel zur Identifikation. Als Identifikation kann sowohl das Zeichen des entsprechenden Werkzeugs gespeichert sein oder eine sonstige Kennung. Die Handhabungseinrichtung bzw. das Sensormittel der Handhabungseinrichtung kann mit einer Steuereinrichtung verbunden sein, welche die ausgelesenen Identifikationen mit vorgegebenen bzw. Soll-Identifikationen vergleicht und bei einem Unterschied ein entsprechendes Signal oder eine entsprechende Gegenmaßnahme erzeugt. Gleichermaßen wird durch die Steuereinheit gespeichert, wie oft und in welchem Zeitraum jedes Werkzeug verwendet wurde. Dadurch kann eine Bedienperson feststellen, welche Werkzeuge aufgrund von Verschleiß auszutauschen sind. Der Verschleiß kann sich beispielsweise daran bemessen, wie oft ein Werkzeug innerhalb eines bestimmten Zeitintervalls für ein bestimmtes Rohlingmaterial verwendet wurde.

Ein bevorzugtes Ausführungsbeispiel der Erfindung wird nachfolgend anhand der Zeichnung näher erläutert. In dieser zeigen:
- Fig. 1: eine Sicht auf zwei Werkzeughalterahmen,
- Fig. 2: eine schematische Darstellung einer Vorrichtung während eines Verfahrensschrittes,
- Fig. 3: eine schematische Darstellung der Vorrichtung während eines weiteren Verfahrensschrittes,
- Fig. 4: eine schematische Darstellung der Vorrichtung während eines weiteren Verfahrensschrittes,
- Fig. 5: eine schematische Darstellung der Vorrichtung während eines weiteren Verfahrensschrittes,
- Fig. 6: eine schematische Darstellung der Vorrichtung während eines weiteren Verfahrensschrittes,
- Fig. 7: eine schematische Darstellung der Vorrichtung während eines weiteren Verfahrensschrittes,
- Fig. 8: eine schematische Darstellung der Vorrichtung während eines weiteren Verfahrensschrittes, und
- Fig. 9: eine schematische Darstellung der Vorrichtung während eines weiteren Verfahrensschrittes.

Die gezeigte Vorrichtung 10 dient dazu, Kennzeichen, insbesondere Kraftfahrzeugkennzeichen 11, herzustellen, nämlich eine individuelle Zeichenfolge in einen Kennzeichenrohling 12 für das Kraftfahrzeugkennzeichen 11 einzuprägen. Bei der hier gezeigten Vorrichtung 10 werden nur die individuellen Zeichenfolgen und ggf. Symbole in den Kennzeichenrohling 12 eingeprägt. Der Rohling 12 kann aber auch schon vorgeprägt sein, beispielsweise mit einer umlaufenden Randprägung 13 und/oder wiederkehrenden Buchstaben, Zeichen, Ziffern oder Symbolen. Der Kennzeichenrohling 12 besteht aus Stahl oder Aluminiumblech oder ggf. auch einer Kunststoffplatte oder Folie. Während der Kennzeichenrohling 12 aus Stahl oder Aluminium kalt geprägt wird, kann das Prägen eines Rohlings 12 aus Kunststoff im erwärmten bzw. aufgeheizten Zustand erfolgen. Gleichermaßen ist es auch denkbar, dass der Rohlings 12 nicht erwärmt wird.

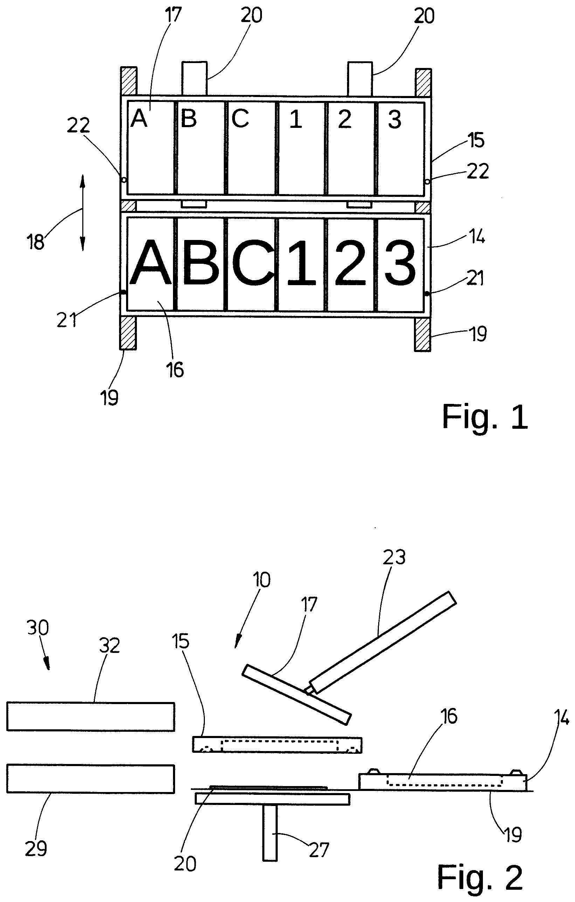

Die hier gezeigte Vorrichtung 10 weist zwei Werkzeughalterahmen, nämlich einen unteren Werkzeughalterahmen 14 und einen oberen Werkzeughalterahmen 15, auf (Fig. 1). Die beiden Werkzeughalterahmen 14, 15 sind parallel zueinander verschoben und übereinander angeordnet. In den unteren Werkzeughalterahmen 14 sind bei dem hier dargestellten Ausführungsbeispiel sechs Prägewerkzeuge bzw. sechs Positive 16 von sechs Prägewerkzeugen positioniert. Auf dem oberen Werkzeughalterahmen 15 sind entsprechend der Position der Positive 16 Negative 17 der Prägewerkzeuge platziert. Jedes Paar eines Positivs 16 und eines Negativs 17 bilden ein Prägewerkzeug. Durch jedes einzelne Prägewerkzeug bzw. Paar bestehend aus einem Negativ 17 und einem Positiv 16 lässt sich ein Zeichen prägen. Die beiden Prägewerkzeugteile sind dabei unabhängig voneinander bewegbar. Die Werkzeughalterahmen 14, 15 sind derart ausgebildet, dass die einzelnen Positive 16 bzw. Negative 17 auf den Halterahmen 14, 15 ablegbar sind, ohne dass die Positive 16 bzw. Negative 17 durch die Halterahmen 14, 15 hindurchfallen. Dazu weisen die Positive 16 und Negative 17 entsprechende Vorsprünge auf, die mit den Rahmen 14, 15 zusammenfallen.

Sowohl der untere Werkzeughalterahmen 14 als auch der obere Werkzeughalterahmen 15 sind entlang Pfeilrichtung 18 beweglich gelagert bzw. lassen sich durch nicht dargestellte Antriebe hin und her bewegen. Der untere Werkzeughalterahmen 14 wird entlang von Linearantrieben 19 unter den oberen Werkzeughalterahmen 15 verfahren. Dabei schiebt sich der untere Werkzeughalterahmen 14 auf Schienen 20. Diese Schienen 20 greifen in eine nicht dargestellte Aufnahme an einer Unterseite des unteren Werkzeughalterahmens 14 und bewirken, dass der untere Werkzeughalterahmen 14 quer zu der Pfeilrichtung 18 fixiert wird. Sobald der untere Werkzeughalterahmen 14 unter dem oberen Werkzeughalterahmen 15 platziert ist, wird der untere Werkzeughalterahmen 14 angehoben und zwar gegen den Werkzeughalterahmen 15. Für eine gegenseitige Ausrichtung bzw. Fixierung der Rahmen 14, 15 bzw. der Negative 17 und der Positive 16 weist der untere Werkzeugrahmen 14 zwei Stifte 21 auf. Diese Stifte 21 werden bei dem Anheben des unteren Werkzeughalterahmens 14 in Öffnungen 22 in dem oberen Werkzeughalterahmen 15 bewegt, wodurch die beiden Rahmen 14, 15 relativ zueinander fixiert sind.

Bevor der untere Werkzeughalterahmen 14 jedoch unter den oberen Werkzeughalterahmen 15 verfahren wird, werden zunächst automatisch durch eine Handhabungseinrichtung bzw. ein Erfassungsmittel 23 die Positive 16 und die Negative 17 in den Rahmen 14, 15 dem herzustellenden Kraftfahrzeugkennzeichen 11 entsprechend abgelegt. Dabei wird zunächst das Negativ 17 aus einem nicht dargestellten Magazin für die Prägewerkzeuge entnommen und an einer entsprechenden Stelle auf den oberen Werkzeughalterahmen 15 abgesetzt. Darauf wird das entsprechende Positiv 16 des Prägewerkzeuges von dem Erfassungsmittel 23 aus dem Magazin entnommen und an der entsprechenden Stelle auf dem unteren Werkzeughalterahmen 14 abgelegt. Dies wird so lange wiederholt, bis die richtigen Zeichen für das zu prägende Kennzeichen auf den Rahmen 14, 15 realisiert sind.

In einem weiteren Schritt wird der Kennzeichenrohling 12 von dem Erfassungsmittel 23 aus einem Vorrat für Kennzeichenrohlinge 12 entnommen und auf dem unteren Werkzeughalterahmen 14 bzw. auf den Positiven 16 abgelegt. Bei dem hier dargestellten Ausführungsbeispiel weist der Kennzeichenrohling 12 bereits eine Randprägung 13 auf. Diese Randprägung 13 korrespondiert mit entsprechenden Strukturen 24, 25 in dem unteren bzw. oberen Werkzeughalterahmen 14, 15. Durch diese vorgeprägte Randprägung 13 wird der Rohling 12 auf dem Halterahmen 14 wenigstens weitestgehend fixiert und verrutscht nicht während einer Bewegung entlang Pfeilrichtung 26. Sofern der Kennzeichenrohling 12 keine Randprägung 13 aufweist, kann es vorgesehen sein, dass die Rahmen 14, 15 entsprechende nicht dargestellte Stifte aufweisen, gegen die der Rohling sodann gesetzt wird.

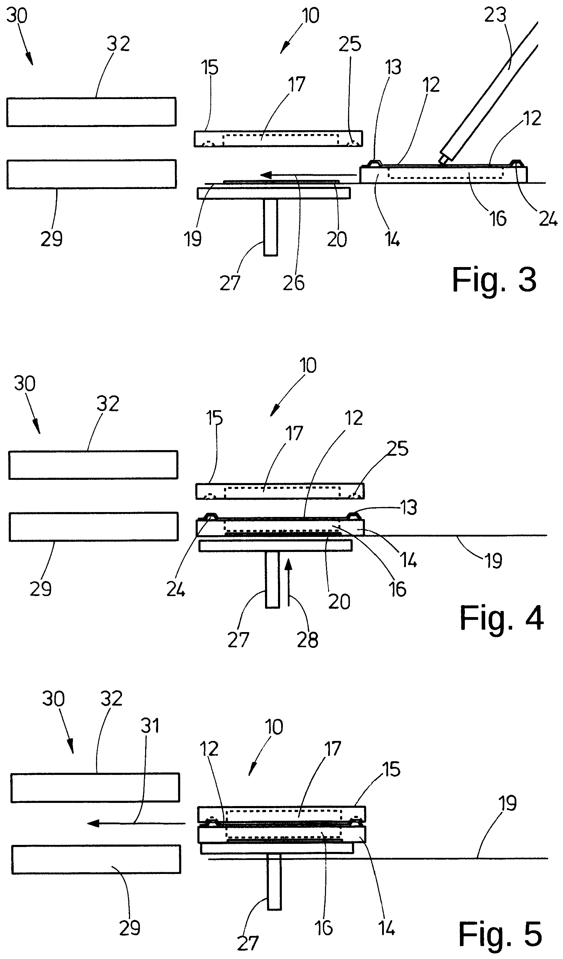

Sobald der Kennzeichenrohling 12 platziert ist, wird der untere Werkzeughalterahmen 14 über die Schienen 20 bewegt, sodass er sich direkt unter dem oberen Werkzeughalterahmen 14 befindet (Fig. 4). Im Weiteren wird der untere Werkzeughalterahmen 14 mitsamt dem Rohling 12 durch eine Hubeinrichtung 27 entlang Pfeilrichtung 28 angehoben, sodass der Rohling 12 den oberen Werkzeughalterahmen 15 berührt bzw. nahezu berührt. Bevor die beiden Rahmen 14, 15 in Kontakt treten bzw. bevor der Rohling 12 mit dem oberen Werkzeughalterahmen in Kontakt tritt, werden die einzelnen Negative 17 und Positive 16 durch eine nicht dargestellte Schiebeeinrichtung zusammengeschoben, sodass eine definierte Ausrichtung garantiert werden kann.

Die nun zusammen verfahrenen Rahmen 14, 15 befinden sich in einer Ebene, die mit einer Ebene eines unteren Prägeteils 29 einer Prägeeinrichtung 30 zusammenfällt. Die zusammengefahrenen Rahmen 14, 15 werden sodann von einer entsprechenden Einrichtung in Pfeilrichtung 31 in die Prägeeinrichtung 30 bzw. zwischen das untere Prägeteil 29 und ein oberes Prägeteil 32 verfahren (Fig. 5).

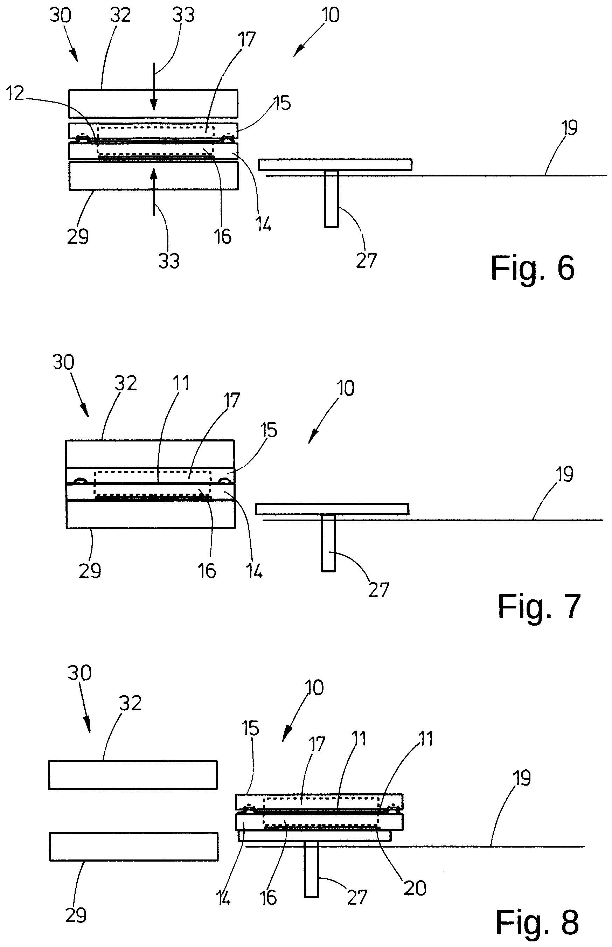

In der Prägeeinrichtung 30 werden sodann die Prägeteile 29, 32 in Pfeilrichtung 33 zusammengefahren. Dabei werden insbesondere die Negative 17 und die Positive 16 gegeneinander gepresst, sodass die entsprechenden Zeichen in den Rohling 12 geprägt werden (Fig. 6). Dabei werden die Prägeteile 29, 32 maximal zusammenbewegt, sodass die geprägten Kraftfahrzeugkennzeichen 11 immer die gleiche Prägung aufweisen (Fig. 7). Zwischen den Werkzeugrahmen 14, 15 ist nun aus dem Rohling 12 das Kraftfahrzeugkennzeichen 11 entstanden.

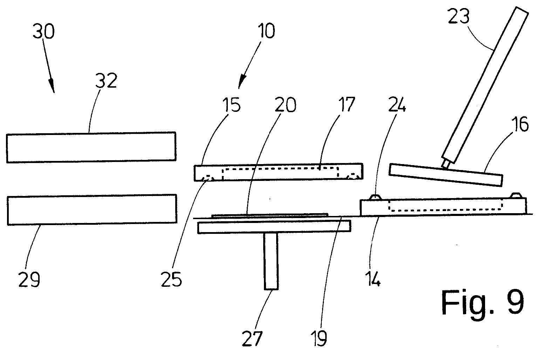

Nachdem der Kennzeichenrohling 12 in der Prägeeinrichtung 30 zu den Kraftfahrzeugkennzeichen 11 geprägt wurde, werden die beiden Werkzeughalterahmen 14, 15 wieder gemeinschaftlich aus der Prägeeinrichtung 30 herausbefördert (Fig. 8). Im weiteren Verfahren erfolgen die zuvor beschriebenen Schritte in der entgegengesetzten Reihenfolge. Nachdem der untere Werkzeughalterahmen 14 durch die Hubeinrichtung 27 wieder von dem oberen Werkzeughalterrahmen 15 beabstandet wurde und auf den Schienen 20 abgesetzt wurde, wird der Rahmen 14 entgegen der Pfeilrichtung 26 in die Ausgangsposition verfahren. In dieser in den Fig. 3 und 9 dargestellten Ausgangsposition der Vorrichtung 10 wird durch das Erfassungsmittel 23 zunächst das fertige Kraftfahrzeugkennzeichen 11 von dem unteren Werkzeughalterahmen 14 bzw. von den Positiven 16 angehoben und einem Abförderer zugeführt. Gegebenenfalls wird sodann ein weiterer Kennzeichenrohling 12 auf den Positiven 16 durch das Erfassungsmittel 23 abgelegt und durch das vorbeschriebene Verfahren zu einem Kraftfahrzeugkennzeichen 11, insbesondere zu dem zweiten Kennzeichen eines Kennzeichenpaars geprägt. Für die Herstellung eines Kraftfahrzeugkennzeichens 11 mit einem neuen Zeichensatz wird von dem Erfassungsmittel 23 zunächst ein Positiv 16 aus dem unteren Werkzeughalterahmen 14 angehoben und an der entsprechenden Position in dem Magazin abgelegt. Darauf folgend wird sodann das entsprechende Positiv 16 von dem Erfassungsmittel 23 angehoben und auf das Negativ 17 in dem Magazin abgesetzt. Es ist außerdem denkbar, dass bei einem Wechsel mehrerer Zeichen bzw. Prägewerkzeugen zunächst alle Positive 16 von dem unteren Werkzeughalterahmen 14 entnommen werden und sodann die entsprechende Negative 17. Während des Prägevorgangs verharrt das Erfassungsmittel 23 in einer bevorzugten Position aus der heraus sie den nächsten Schritt besonders zeiteffizient ausführen kann.

Die erfindungsgemäße Vorrichtung und das erfindungsgemäße Verfahren eignen sich nicht nur zur vorstehend beschriebenen Herstellung von Kraftfahrzeugkennzeichen 11, sondern auch zur Herstellung anderer Kennzeichen mit einer individuellen Zeichenfolge oder nur einem individuellen Symbol.

### Bezugszeichenliste:

- 10: Vorrichtung
- 11: Kraftfahrzeugkennzeichen
- 12: Kennzeichenrohling
- 13: Randprägung
- 14: unterer Werkzeughalterahmen
- 15: oberer Werkzeughalterahmen
- 16: Positiv
- 17: Negativ
- 18: Pfeilrichtung
- 19: Linearantrieb
- 20: Schiene
- 21: Stift
- 22: Öffnung
- 23: Erfassungsmittel
- 24: Struktur
- 25: Struktur
- 26: Pfeilrichtung
- 27: Hubeinrichtung
- 28: Pfeilrichtung
- 29: unteres Prägeteil
- 30: Prägeeinrichtung
- 31: Pfeilrichtung
- 32: oberes Prägeteil
- 33: Pfeilrichtung

## Patentansprüche

1. Verfahren zum Prägen von Kennzeichen, insbesondere Kraftfahrzeugkennzeichen (11), wobei Prägewerkzeuge mit Zeichen entsprechend dem zu prägenden Kennzeichen individuell zusammengestellt werden, indem von einer Handhabungseinrichtung die für das jeweils zu prägende Kennzeichen benötigten Prägewerkzeuge aus einem Magazin entnommen werden, den Prägewerkzeugen ein Kennzeichenrohling (12) zugeführt wird und in einer Prägeeinrichtung (30) von den Prägewerkzeugen die Zeichen in den Kennzeichenrohling (12) geprägt werden, wobei zwei relativ zueinander bewegbare Werkzeughalterahmen, nämlich ein unterer Werkzeughalterahmen (14) und ein oberer Werkzeughalterahmen (15), nacheinander von der Handhabungseinrichtung mit mindestens einem Positiv (16) eines Prägewerkzeugs und mit mindestens einem Negativ (17) eines Prägewerkzeugs bestückt werden, wobei bei einer horizontalen Bewegung des unteren Werkzeughalterahmens (14) selbiger in mindestens einer Schiene (20) geführt wird, wobei zum Ablegen des mindestens einen Positivs (16) und des mindestens einen Negativs (17) auf den Werkzeughalterahmen (14, 15) und zum Abheben des mindestens einen Positivs (16) und des mindestens einen Negativs (17) von den Werkzeughalterahmen (14, 15) der untere Werkzeughalterahmen (14) horizontal und parallel zu dem oberen Werkzeughalterahmen (15) verfahren wird und der obere Werkzeughalterahmen (15) horizontal und parallel zu dem unterem Werkzeughalterahmen (14) verfahren wird, wobei
der obere und der untere Werkzeughalterahmen (14, 15) durch eine horizontale und parallele Relativbewegung übereinander ausgerichtet werden und der untere Werkzeughalterahmen (14) unter den oberen Werkzeughalterahmen (15) verschoben wird, sodass die korrespondierenden Positive (16) und Negative (17) der Prägewerkzeuge übereinander ausgerichtet sind, wobei zwischen den Positiven (16) und Negativen (17) der Kennzeichenrohling (12) positioniert ist, und wobei von der Handhabungseinrichtung mit mindestens einem im dreidimensionalen Raum bewegbaren Erfassungsmittel (23) die benötigten Negative (17) und Positive (16), aus einem Magazin herausgesucht und entnommen werden und in der richtigen Reihenfolge auf mindestens einen oberen und mindestens einen unteren Werkzeughalterahmen (14, 15) abgelegt werden, und wobei
der geprägte Kennzeichenrohling (12) durch die Handhabungseinrichtung von dem unteren Werkzeughalterahmen (14) abgehoben und einer Abförderung zugeführt wird.

2. Verfahren zum Prägen von Kennzeichen nach Anspruch 1, **dadurch gekennzeichnet, dass** zunächst mindestens ein Negativ (17) eines Prägewerkzeugs, vorzugsweise mehrere Negative (17) mehrerer Prägewerkzeuge, auf dem oberen Werkzeughalterahmen (15) abgelegt werden und darauf das entsprechende Positiv (16) des Prägewerkzeugs, vorzugsweise die entsprechenden Positive (16) der Prägewerkzeuge, auf den unteren Werkzeughalterahmen (15) abgelegt werden.

3. Verfahren zum Prägen von Kennzeichen nach Anspruch 1 oder 2, **dadurch gekennzeichnet, dass** nach der Bestückung bzw. der Ablage des mindestens einen Negativs (17) und des mindestens einen Positivs (16) auf die Werkzeughalterahmen (14, 15), auf den unteren Werkzeughalterahmen (14), vorzugsweise auf die Positive (16) der Prägewerkzeuge, der Kennzeichenrohling (12) von der Handhabungseinrichtung abgelegt wird.

4. Verfahren zum Prägen von Kennzeichen nach einem der vorhergehenden Ansprüche, **dadurch gekennzeichnet, dass** bei der horizontalen Bewegung des unteren Werkzeughalterahmen (14) selbiger in zwei Schienen (20) geführt wird.

5. Verfahren zum Prägen von Kennzeichen nach einem der vorhergehenden Ansprüche, **dadurch gekennzeichnet, dass** die beiden übereinander ausgerichteten Werkzeughalterahmen (14, 15) vertikal relativ zueinander verfahren werden, wobei vorzugsweise der untere Rahmen (14) auf den oberen Rahmen (15) zubewegt wird, und sodann beide Werkzeughalterahmen (14, 15) gemeinschaftlich in die Prägeeinrichtung (30) verfahren werden, in der die Werkzeughalterahmen (14, 15) gegeneinander verpresst werden.

6. Verfahren zum Prägen von Kennzeichen nach einem der vorhergehenden Ansprüche, **dadurch gekennzeichnet, dass** die beiden Rahmen (14, 15) nach dem Pressen gemeinschaftlich aus der Prägeeinrichtung (30) herausverfahren werden und nach einem vertikalen Absenken des unteren Werkzeughalterahmens (14) relativ zu dem oberen Werkzeughalterahmen (15) der untere Werkzeughalterahmen (14) unter dem oberen Werkzeughalterahmen (15) horizontal vorverfahren wird zum Abheben mindestens eines Positivs (16) und mindestens eines Negativs (17) und zur Neubestückung der Rahmen (14, 15) mit mindestens einem Positiv (16) und mindestens einem Negativ (17).

7. Verfahren zum Prägen von Kennzeichen nach einem der vorhergehenden Ansprüche, **dadurch gekennzeichnet, dass** von der Handhabungseinrichtung ein Kennzeichenrohling (12) aus mindestens einem Speicher entnommen und auf dem unteren Werkzeughalterahmen (14) bzw. auf den Positiven (16) abgelegt wird, wobei vorzugsweise im Anschluss ein weiterer unterer Werkzeughalterahmen von der Handhabungseinrichtung mit einem weiteren Kennzeichenrohling (12) bestückt wird.

8. Verfahren zum Prägen von Kennzeichen nach einem der vorhergehenden Ansprüche, **dadurch gekennzeichnet, dass** der geprägte Kennzeichenrohling (12) durch die Handhabungseinrichtung von dem unteren Werkzeughalterahmen (14) bzw. von den Positiven (16) der Prägewerkzeuge abgehoben und einer Abförderung zugeführt wird und ein weiterer geprägter Kennzeichenrohling (12) durch die Handhabungseinrichtung von einem weiteren unteren Werkzeughalterahmen bzw. von Positiven der Prägewerkzeuge abgehoben und einer Abförderung zugeführt wird.

9. Verfahren zum Prägen von Kennzeichen nach einem der vorhergehenden Ansprüche, **dadurch gekennzeichnet, dass** von der Handhabungseinrichtung untere und obere Werkzeughalterahmen (14, 15) von mehreren, vorzugsweise zwei, Prägeeinrichtungen (30) mit Negativen (17), Positiven (16) und Kennzeichenrohling (12) im Wechsel oder nacheinander bestückt und gewechselt werden.

10. Verfahren zum Prägen von Kennzeichen nach einem der vorhergehenden Ansprüche, **dadurch gekennzeichnet, dass** zum Prägen verschiedenartiger, insbesondere verschiedenartig dimensionierter, Kennzeichenrohlinge (12) die Werkzeughalterahmen (14, 15) der mindestens einen Prägeeinrichtungen (30), und insbesondere auch die Prägewerkzeuge, der Form der Kennzeichenrohling (12) entsprechend ausgetauscht werden.

11. Verfahren zum Prägen von Kennzeichen nach einem der vorhergehenden Ansprüche, **dadurch gekennzeichnet, dass** die Prägewerkzeuge, insbesondere die Positive (16) und die Negative (17), sowie Prägeeinsätze in den Werkzeughalterahmen (14, 15) vor dem Aufeinanderzubewegen der Werkzeughalterahmen (14, 15) zusammengeschoben, zentriert und/oder vermittelt werden durch Beaufschlagung einer seitlichen bzw. vertikalen Kraft, die durch einen Aktuator, insbesondere einen Zentrierzylinder, vermittelt wird.

12. Verfahren zum Prägen von Kennzeichen nach einem der vorhergehenden Ansprüche, **dadurch gekennzeichnet, dass** vor dem Bestücken der Werkzeughalterahmen (14, 15) mit den Prägewerkzeugen, insbesondere den Negativen (17) und Positiven (16), selbige durch die Handhabungseinrichtung identifiziert werden, wobei die Handhabungseinrichtung ein Sensormittel aufweist, mit dem entsprechende Identifikationsmerkmale der Negative (17) und Positive (16) erfasst werden.

13. Vorrichtung (10) zum Prägen von Kennzeichen, insbesondere Kraftfahrzeugkennzeichen (11), mit mindestens einem Magazin für einen Vorrat an Prägewerkzeugen, wenigstens einem Speicher für Kennzeichenrohlinge (12), wenigstens einer Prägeeinrichtung (30) und mindestens einer Handhabungseinrichtung zum Handhaben der Prägewerkzeuge, wobei zwei relativ zueinander bewegbare Werkzeughalterahmen, nämlich einen unteren Werkzeughalterahmen (14) und einen oberen Werkzeughalterahmen (15), zur Aufnahme mindestens eines Positivs (16) des Prägewerkzeugs und mindestens eines Negativs (17) des Prägewerkzeugs, und wobei der untere Werkzeughalterahmen (14) mindestens ein erstes Mittel zum Ausrichten und der obere Werkzeughalterahmen (15) mindestens ein zweites Mittel zum Ausrichten aufweist, wobei beim vertikalen Zusammenfahren der Werkzeughalterahmen (14, 15) das erste und das zweite Mittel zusammengeführt werden und die Werkzeughalterahmen (14, 15) zueinander ausgerichtet werden, wobei im Einsatz der untere Werkzeughalterahmen (14) in zwei Schienen (20) führbar ist, wobei die zwei Schienen (20) den unteren Werkzeughalterahmen (14) unter dem oberen Werkzeughalterahmen (15) ausrichten, und wobei die Handhabungseinrichtung roboterartig ausgebildet ist und dazu dient zum Prägen des Kennzeichens ein Positiv (16) und ein Negativ (17) auf die Werkzeughalterahmen (14, 15) zu platzieren, indem die Handhabungseinrichtung mindestens ein mehrachsig im dreidimensionalen Raum bewegbares Erfassungsmittel (23) aufweist, wobei durch bewegliche Arme der Handhabungseinrichtung das Erfassungsmittel (23) im dreidimensionalen Raum beweglich ist.

14. Vorrichtung (10) zum Prägen von Kennzeichen nach Anspruch 13, **dadurch gekennzeichnet, dass** der untere und/oder der obere Werkzeughalterahmen (15) einem Hubmittel (27) zugeordnet sind zum Zusammenfahren der Werkzeughalterahmen (14, 15) und/oder dass der untere und/oder der obere Werkzeughalterahmen (14, 15) mindestens einem Translationsmittel zum horizontalen gemeinschaftlichen oder getrennten Verfahren zugeordnet sind.

15. Vorrichtung (10) zum Prägen von Kennzeichen nach Anspruch 13 oder 14, **gekennzeichnet durch** mindestens zwei Prägeeinrichtungen (30) mit jeweils einem unteren Werkzeughalterahmen (14) und einem oberen Werkzeughalterahmen (15), wobei beide Prägeeinrichtungen (30) durch dieselbe Handhabungseinrichtung bedienbar sind.

16. Vorrichtung (10) zum Prägen von Kennzeichen nach einem der Ansprüche 13 bis 15, **dadurch gekennzeichnet, dass** die Prägewerkzeuge, insbesondere die Negative (17) und Positive (16), Identifikationsmerkmale und die Handhabungseinrichtung eine Sensoreinrichtung aufweisen, wobei die Identifikationsmerkmale von der Sensoreinrichtung der Handhabungseinrichtung auslesbar sind.

## Claims

1. A method for embossing license plates, in particular motor vehicle license plates (11), wherein embossing dies having characters corresponding to the license plate to be embossed are individually assembled, in that the embossing dies required for the respective license plate to be embossed are retrieved from a magazine by a handing installation, a license plate blank (12) is fed to the embossing dies, and in an embossing installation (30) the characters are embossed in the license plate blank (12) by the embossing dies, wherein two die holding frames, specifically a lower die holding frame (14) and an upper die holding frame (15), which are movable relative to one another, are successively populated by the handling installation with at least one positive (16) of an embossing die and with at least one negative (17) of an embossing die, wherein during a horizontal movement of the lower die holding frame (14) the latter is guided in at least one rail (20), wherein for placing the at least one positive (16) and the at least one negative (17) onto the die holding frames (14, 15) and for lifting the at least one positive (16) and the at least one negative (17) from the die holding frames (14, 15), the lower die holding frame (14) is displaced horizontally and parallel to the upper die holding frame (15), and the upper die holding frame (15) is displaced horizontally and parallel to the lower die holding frame (14), wherein the upper and the lower die holding frames (14, 15) are aligned one above the another by a horizontal and parallel relative movement, the lower die holding frame (14) being displaced below the upper die holding frame (15) such that the corresponding positives (16) and negatives (17) of the embossing dies are aligned one above the other, wherein the license plate blank (12) is positioned between the positives (16) and the negatives (17), and wherein the required negatives (17) and positives (16), are picked and retrieved from a magazine and placed in the correct sequence onto at least one upper and at least one lower die holding frame (14, 15) by the handling installation having at least one acquisition means (23) that is movable in three-dimensional space. and wherein the embossed license plate blank (12) is lifted from the lower die holding frame (14) and fed to an outfeed conveyor by the handling installation

2. The method for embossing license plates as claimed in claim 1, **characterized in that** first at least one negative (17) of an embossing die, preferably a plurality of negatives (17) of a plurality of embossing dies, are placed onto the upper die holding frame (15), and thereafter the corresponding positive (16) of the embossing die, preferably the corresponding positives (16) of the embossing dies, are placed onto the lower die holding frame (15).

3. The method for embossing license plates as claimed in claim 1 or 2, **characterized in that** upon populating, or placing the at least one negative (17) and the at least one positive (16) onto the die holding frames (14, 15), respectively, the license plate blank (12) is placed by the handling installation onto the lower die holding frame (14), preferably onto the positives (16) of the embossing dies.

4. The method for embossing license plates as claimed in one of the preceding claims, **characterized in that** during the horizontal movement of the lower die holding frame (14) the latter is guided in two rails (20).

5. The method for embossing license plates as claimed in one of the preceding claims, **characterized in that** the two die holding frames (14, 15) which are aligned one above the other are relocated vertically relative to one another, wherein the lower frame (14) is preferably moved toward the upper frame (15) and thereafter both die holding frames (14, 15) are conjointly relocated into the embossing installation (30) in which the die holding frames (14, 15) are mutually compressed.

6. The method for embossing license plates as claimed in one of the preceding claims, **characterized in that** the two frames (14, 15) upon pressing are conjointly relocated from the embossing installation (30) and, upon vertically lowering the lower die holding frame (14) relative to the upper die holding frame (15), the lower die holding frame (14) is relocated horizontally below the upper die holding frame (15) so as to lift at least one positive (16) and at least one negative (17), and so as to repopulate the frames (14, 15) with at least one positive (16) and at least one negative (17).

7. The method for embossing license plates as claimed in one of the preceding claims, **characterized in that** a license plate blank (12) is retrieved from at least one store and placed onto the lower die holding frame (14), or onto the positives (16), respectively, by the handling installation, wherein subsequently a further lower die holding frame is preferably populated with a further license plate blank (12) by the handling installation.

8. The method for embossing license plates as claimed in one of the preceding claims, **characterized in that** the embossed license plate blank (12) is lifted from the lower die holding frame (14), or from the positives (16) of the embossing dies, respectively, and fed to an outfeed conveyor by the handling installation, and a further embossed license plate blank (12) is in particular lifted from a further lower die holding frame, or from positives of the embossing dies, respectively, and fed to an outward conveyor by the handling installation.

9. The method for embossing license plates as claimed in one of the preceding claims, **characterized in that** lower and upper die holding frames (14, 15) of a plurality of, preferably two, embossing installations (30) are alternatingly or successively populated and replaced with negatives (17), positives (16) and license plate blank (12) by the handling installation.

10. The method for embossing license plates as claimed in one of the preceding claims, **characterized in that** for embossing license plate blanks (12) of different types, in particular of different dimensions, the die holding frames (14, 15) of the at least one embossing installation (30), and in particular also the embossing dies, are replaced so as to correspond to the shape of the license plate blank (12).

11. The method for embossing license plates as claimed in one of the preceding claims, **characterized in that** the embossing dies, in particular the positives (16) and the negatives (17), as well as embossing inserts, prior to the die holding frames (14, 15) being converged, are pushed together, centered and/or imparted in the die holding frames (14, 15) by being impinged by a lateral or vertical force, respectively, which is imparted by an actuator, in particular a centering cylinder.

12. The method for embossing license plates as claimed in one of the preceding claims, **characterized in that** prior to populating the die holding frames (14, 15) with the embossing dies, in particular the negatives (17) and positives (16), the latter are identified by the handling installation, wherein the handling installation has a sensor means by way of which corresponding identifying features of the negatives (17) and positives (16) are detected.

13. A device (10) for embossing license plates, in particular motor vehicle license plates (11), having at least one magazine for a supply of embossing dies, at least one store for license plate blanks (12), at least one embossing installation (30) and at least one handling installation for handling the embossing dies, wherein two die holding frames, specifically a lower die holding frame (14) and an upper die holding frame (15), which are movable relative to one another for receiving at least one positive (16) of the embossing die and at least one negative (17) of the embossing die, and wherein the lower die holding frame (14) has at least one first means for alignment and the upper die holding frame (15) has at least one second means for alignment, wherein the first and the second means are brought together and the die holding frames (14, 15) are mutually aligned when vertically converging the die holding frames (14, 15), wherein in operation the lower die holding frame (14) is able to be guided in two rails (20), wherein the two rails (20) align the lower die holding frame (14) below the upper die holding frame (15), and wherein the handling installation is configured in the manner of a robot and serves for placing a positive (16) and a negative (17), required for embossing the license plate, onto the die holding frames (14, 15) in that the handling installation has at least one acquisition means (23) which is movable in a plurality of axes in three-dimensional space, wherein the acquisition means (23) is movable in three-dimensional space by movable arms of the handling installation.

14. The device (10) for embossing license plates as claimed in claim 13, **characterized in that** the lower and/or the upper die holding frame (15) for converging the die holding frames (14, 15) is/are assigned to a lifting means (27), and/or **in that** the lower and/or the upper die holding frame (14, 15) for conjoint or separate horizontal relocation is/are assigned to at least one translational motion means.

15. The device (10) for embossing license plates as claimed in claims 13 or 14, **characterized by** at least two embossing installations (30) having in each case one lower die holding frame (14) and one upper die holding frame (15), wherein both embossing installations (30) are able to be operated by the same handling installation.

16. The device (10) for embossing license plates as claimed in one of claims 13 to 15, **characterized in that** the embossing dies, in particular the negatives (17) and the positives (16) have identifying features and the handling installation has a sensor installation, wherein the identifying features are able to be read by the sensor installation of the handling installation.

## Revendications

1. Procédé d'estampage de plaques d'immatriculation, en particulier des plaques d'immatriculation (11) de véhicules à moteur, des outils d'estampage avec des caractères étant assemblés individuellement de manière à correspondre à la plaque d'immatriculation à estamper en ce que les outils d'estampage nécessaires pour la plaque d'immatriculation à estamper respectivement sont prélevés d'un magasin par un dispositif de manipulation, une ébauche de plaque d'immatriculation (12) est amenée aux outils d'estampage et les caractères sont estampés dans l'ébauche de plaque d'immatriculation (12) par les outils d'estampage dans un dispositif d'estampage (30), deux cadres porte-outils pouvant être déplacés l'un par rapport à l'autre, à savoir un cadre porte-outils inférieur (14) et un cadre porte-outils supérieur (15), étant équipés successivement par le dispositif de manipulation d'au moins un élément positif (16) d'un outil d'estampage et d'au moins un élément négatif (17) d'un outil d'estampage, ce dernier étant guidé dans au moins un rail (20) lors d'un déplacement horizontal du cadre porte-outils inférieur (14), le cadre porte-outils inférieur (14) étant déplacé horizontalement et parallèlement au cadre porte-outils supérieur (15) et le cadre porte-outils supérieur (15) étant déplacé horizontalement et parallèlement au cadre porte-outils inférieur (14) pour déposer l'au moins un élément positif (16) et l'au moins un élément négatif (17) sur le cadre porte-outils (14, 15) et pour soulever l'au moins un élément positif (16) et l'au moins un élément négatif (17) du cadre porte-outils (14, 15),
le cadre porte-outils supérieur et le cadre porte-outils inférieur (14, 15) étant alignés l'un au-dessus de l'autre par un déplacement relatif horizontal et parallèle et le cadre porte-outils inférieur (14) étant coulissé sous le cadre porte-outils supérieur (15) si bien que les éléments positifs (16) et négatifs (17) correspondants des outils d'estampage sont alignés les uns au-dessus des autres, l'ébauche de plaque d'immatriculation (12) étant positionnée entre les éléments positifs (16) et les éléments négatifs (17), et les éléments négatifs (17) et positifs (16) requis étant sélectionnés et prélevés dans un magasin par le dispositif de manipulation avec au moins un moyen de saisie (23) pouvant être déplacé dans les trois dimensions de l'espace et étant déposés dans l'ordre correct sur au moins un cadre porte-outils supérieur et au moins un cadre porte-outils inférieur (14, 15), et l'ébauche de plaque d'immatriculation (12) estampée étant soulevée du cadre porte-outils inférieur (14) par le dispositif de manipulation et étant amenée à une sortie.

2. Procédé d'estampage de plaques d'immatriculation selon la revendication 1, **caractérisé en ce que** d'abord au moins un élément négatif (17) d'un outil d'estampage, de préférence plusieurs éléments négatifs (17) de plusieurs outils d'estampage, sont déposés sur le cadre porte-outils supérieur (15), puis l'élément positif (16) correspondant de l'outil d'estampage, de préférence les éléments positifs (16) correspondants des outils d'estampage, sont déposés sur le cadre porte-outils inférieur (15).

3. Procédé d'estampage de plaques d'immatriculation selon la revendication 1 ou 2, **caractérisé en ce que**, après l'équipement ou le dépôt de l'au moins un élément négatif (17) et de l'au moins un élément positif (16) sur les cadres porte-outils (14, 15), l'ébauche de plaque d'immatriculation (12) est déposée par le dispositif de manipulation sur le cadre porte-outils inférieur (14), de préférence sur les éléments positifs (16) des outils d'estampage.

4. Procédé d'estampage de plaques d'immatriculation selon l'une des revendications précédentes, **caractérisé en ce que**, lors du déplacement horizontal du cadre porte-outils inférieur (14), celui-ci est guidé dans deux rails (20).

5. Procédé d'estampage de plaques d'immatriculation selon l'une des revendications précédentes, **caractérisé en ce que** les deux cadres porte-outils (14, 15) alignés l'un au-dessus de l'autre sont déplacés verticalement l'un par rapport à l'autre, le cadre inférieur (14) étant de préférence déplacé vers le cadre supérieur (15), puis les deux cadres porte-outils (14, 15) étant déplacés ensemble dans le dispositif d'estampage (30), dans lequel les cadres porte-outils (14, 15) sont pressés l'un contre l'autre.

6. Procédé d'estampage de plaques d'immatriculation selon l'une des revendications précédentes, **caractérisé en ce que** les deux cadres (14, 15) sont sortis ensemble du dispositif d'estampage (30) après le pressage et, après un abaissement vertical du cadre porte-outils inférieur (14) par rapport au cadre porte-outils supérieur (15), le cadre porte-outils inférieur (14) est prédéplacé horizontalement sous le cadre porte-outils supérieur (15) pour soulever au moins un élément positif (16) et au moins un élément négatif (17) et pour rééquiper les cadres (14, 15) avec au moins un élément positif (16) et au moins un élément négatif (17).

7. Procédé d'estampage de plaques d'immatriculation selon l'une des revendications précédentes, **caractérisé en ce qu'**une ébauche de plaque d'immatriculation (12) est prélevée d'au moins une réserve par le dispositif de manipulation et est déposée sur le cadre porte-outils inférieur (14) ou sur les éléments positifs (16), un autre cadre porte-outils inférieur étant de préférence équipé immédiatement après d'une autre ébauche de plaque d'immatriculation (12) par le dispositif de manipulation.

8. Procédé d'estampage de plaques d'immatriculation selon l'une des revendications précédentes, **caractérisé en ce que** l'ébauche de plaque d'immatriculation (12) estampée est soulevée par le dispositif de manipulation du cadre porte-outils inférieur (14) ou des éléments positifs (16) des outils d'estampage et est amenée à une sortie, et une autre ébauche de plaque d'immatriculation (12) estampée est soulevée par le dispositif de manipulation d'un autre cadre porte-outils inférieur ou des éléments positifs des outils d'estampage et est amenée à une sortie.

9. Procédé d'estampage de plaques d'immatriculation selon l'une des revendications précédentes, **caractérisé en ce que** des cadres porte-outils inférieur et supérieur (14, 15) de plusieurs, de préférence deux, dispositifs d'estampage (30) sont équipés d'éléments négatifs (17), d'éléments positifs (16) et d'une ébauche de plaque d'immatriculation (12) et sont changés alternativement ou successivement par le dispositif de manipulation.

10. Procédé d'estampage de plaques d'immatriculation selon l'une des revendications précédentes, **caractérisé en ce que** pour l'estampage d'ébauches de plaque d'immatriculation (12) différentes, en particulier dimensionnées différemment, les cadres porte-outils (14, 15) de l'au moins un dispositif d'estampage (30), et en particulier également les outils d'estampage, sont remplacés conformément à la forme des ébauches de plaque d'immatriculation (12).

11. Procédé d'estampage de plaques d'immatriculation selon l'une des revendications précédentes, **caractérisé en ce que** les outils d'estampage, en particulier les éléments positifs (16) et les éléments négatifs (17), ainsi que les inserts d'estampage dans les cadres porte-outils (14, 15), sont, avant de rapprocher les cadres porte-outils (14, 15), enfilés, centrés et/ou transmis par l'application d'une force latérale ou verticale qui est transmise par un actionneur, en particulier un cylindre de centrage.

12. Procédé d'estampage de plaques d'immatriculation selon l'une des revendications précédentes, **caractérisé en ce qu'**avant d'équiper les cadres porte-outils (14, 15) avec les outils d'estampage, en particulier les éléments négatifs (17) et les éléments positifs (16), ceux-ci sont identifiés par le dispositif de manipulation, le dispositif de manipulation comportant un moyen de détection avec lequel des caractéristiques d'identification correspondantes des éléments négatifs (17) et des éléments positifs (16) sont détectées.

13. Ensemble (10) d'estampage de plaques d'immatriculation, en particulier des plaques d'immatriculation (11) de véhicules automobiles, avec au moins un magasin pour un stock d'outils d'estampage, au moins une réserve pour des ébauches de plaques d'immatriculation (12), au moins un dispositif d'estampage (30) et au moins un dispositif de manipulation pour manipuler les outils d'estampage, deux cadres porte-outils pouvant être déplacés l'un par rapport à l'autre, à savoir un cadre porte-outils inférieur (14) et un cadre porte-outils supérieur (15) étant destinés à recevoir au moins un élément positif (16) de l'outil d'estampage et au moins un élément négatif (17) de l'outil d'estampage, et le cadre porte-outils inférieur (14) comportant au moins un premier moyen d'alignement et le cadre porte-outils supérieur (15) comportant au moins un deuxième moyen d'alignement, le premier et le deuxième moyen étant rapprochés et les cadres porte-outils (14, 15) étant alignés l'un par rapport à l'autre lorsque les cadres porte-outils (14, 15) sont déplacés verticalement, le cadre porte-outils inférieur (14) pouvant être guidé dans deux rails (20) lors de l'utilisation, les deux rails (20) alignant le cadre porte-outils inférieur (14) au-dessous du cadre porte-outils supérieur (15), et
le dispositif de manipulation étant conçu à la manière d'un robot et servant à placer, pour estamper la plaque d'immatriculation, un élément positif (16) et un élément négatif (17) sur les cadres porte-outils (14, 15) en ce que le dispositif de manipulation comporte au moins un moyen de saisie (23) pouvant être déplacé dans les trois dimensions de l'espace sur plusieurs axes, le moyen de saisie (23) étant mobile dans les trois dimensions de l'espace par des bras mobiles du dispositif de manipulation.

14. Ensemble (10) d'estampage de plaques d'immatriculation selon la revendication 13, **caractérisé en ce que** le cadre porte-outils inférieur et/ou le cadre porte-outils supérieur (15) sont associés à un moyen de levage (27) pour déplacer les cadres porte-outils (14, 15) et/ou que le cadre porte-outils inférieur et/ou le cadre porte-outils supérieur (14, 15) sont associés à au moins un moyen de translation pour le déplacement conjoint ou séparé horizontal.

15. Ensemble (10) d'estampage de plaques d'immatriculation selon la revendication 13 ou 14, **caractérisé par** au moins deux dispositifs d'estampage (30) avec chacun un cadre porte-outils inférieur (14) et un cadre porte-outils supérieur (15), les deux dispositifs d'estampage (30) pouvant être actionnés par le même dispositif de manipulation.

16. Ensemble (10) d'estampage de plaques d'immatriculation selon l'une des revendications 13 à 15, **caractérisé en ce que** les outils d'estampage, en particulier les éléments négatifs (17) et les éléments positifs (16) comportent des caractéristiques d'identification et le dispositif de manipulation comporte un dispositif de détection, les caractéristiques d'identification pouvant être lues par le dispositif de détection du dispositif de manipulation.
